# EUROPEAN PATENT SPECIFICATION

(11) **EP 0 498 815 B1**
(45) Date of publication and mention of the grant of the patent: **09.03.1994**
(21) Application number: 90915482.5
(22) Date of filing: 24.10.1990
(51) Int. Cl.: C04B 18/30

(54) **PROCESS FOR PRODUCING AN ACTIVE FINE AGGREGATE FOR THE PREPARATION OF CONCRETE**
VERFAHREN ZUR HERSTELLUNG EINES AKTIVEN FEINEN ZUSCHLAGSTOFFES ZUR BETONHERSTELLUNG
PROCEDE DE FABRICATION DE GRANULAT FIN ACTIF AFIN DE PREPARER DU BETON

(30) Priority: 26.10.1989 FI 895090
(43) Date of publication of application: 19.08.1992
(73) Proprietor: Partek Sementti Oy, 21600 Parainen (FI)
(72) Inventor: ERIKSSON, Bo-Erik, SF-10300 Karjaa (FI)
(74) Representative: Silverman, Warren
(86) International application number: FI9000250
(87) International publication number: WO9106513

(56) References cited:
- BE-A- 839 899
- DE-A- 2 259 898
- DE-A- 2 458 304
- US-A- 4 306 912

## Description

In addition to cement and cement binders, also various fine aggregates, as for example so-called pozzolanic substances, are used as binders in concrete. These substances are characterized therein that they contain glass-like silicon oxide, which reacts with the calcium hydroxide generated at a hydratation of cement and forms compounds giving strength to the concrete. To the most used pozzolanas belong fly ash produced from the combustion of coal and peat and silica produced from the preparation of silicon. The reactivity of a pozzolana in concrete is influenced except by the chemical composition, also by the grain size thereof. The grain size of silica is considerably smaller than that of fly ash. As the grain size of a pozzolana decreases, the need for water in concrete increases. Therefore, the Finnish concrete standard always presupposes a use of a plasticizer when silica is used.

The bulk density of the silica produced in the industry is very low. To transport and dose it as such into concrete is difficult and even impossible. Attempts have been made to eliminate the problem by pelletizing the silica into very big pellets with respect to its grain size. The problems with transport and dosage are thus eliminated, but the silica does not decompose properly in a concrete mixer, which prevents the silica from acting in the concrete in the best possible manner. Studies have shown that undecomposable silica pellets have been found in a concrete prepared according to the instructions, which pellets do not provide the concrete with the properties searched for by means of the use of silica. This problem has been decreased by sludging the silica in water before use. Moreover, admixtures have been used at the sludging. The typical content of dry substance in silica sludge is 50 %. Also this process has its drawbacks, as e.g. storing, transport and dosage.

The object of the present invention is to eliminate the drawbacks described above and to provide a process by means of which it is possible to produce in an entirely new manner an active fine aggregate considerably more efficient than the previous ones, the use of which aggregate makes it always possible to achieve the final result desired. This object is achieved by means of the process of the invention characterized in that a raw material mixture is made containing substantially dry inactive and/or weakly active components selected from a group consisting of e.g. limestone, quartz, lump slag, granulated and pelletized blast-furnace slag; and silica and that this substantially dry raw material mixture is ground in a mill or the like, as a result of which joint grinding the silica activates the surfaces of the inactive and/or weakly active components to react easily with the calcium hydroxide.

In the process of the invention, the silica is thus ground in a mill together with the inactive and/or only weakly active materials. The silica, preferably pelletized, then decomposes into very small particles, and according to research, a large part of these particles adheres to the surface of the rest of the material ground and changes the surface of the inactive and/or weakly active material to react very easily with the calcium hydroxide. Another advantage of the process is that the need for water in concrete does not increase at all even though silica is used. The silica added to the grinding can also be unpelletized. This kind of silica changes during grinding in such a way that it can be used for the preparation of concrete. In practice, the share of the pozzolanic substances is some percentages by weight, as practical upper limit can be considered 50 % by weight.

When using the process of the invention, attention is paid to the grain size distribution of the product created. The grain size distribution is selected in such a way that it fills as well as possible the area remaining between the smallest grains of natural stone aggregate and the largest cement grains, which area by nature lacks grains. Consequently, the average grain size of this product, which can, for instance, be called an active filler, is larger than the average grain size of cement and smaller than that of natural fine aggregate. By using the active filler produced by the process of the invention, it is possible to compensate the lacking grain size area by an inactive and/or weakly active basic material, the surface of which is activated by means of a pozzolanic substance. A product of this kind has substantially cheaper production costs than a product with cement properties having the same effect on the strength development of concrete.

Very fine materials, as e.g. silica, increase the need for water in connection with the preparation of concrete, when they are dosed in traditional manners. The main part of the fine material in the product prepared according to the invention has adhered during grinding to the surface of the basic material, and consequently, it does not increase the need for water in concrete. Because, however, a part of the fine material consists of very small loose particles in the product, a plasticizer, as e.g. lignosulphate, is preferably added into the mill at the preparation of the product, which plasticizer adhered to the surface of the fine particles ensures a dispersion of the fine material in the concrete mix.

In tests was used a fine aggregate containing 3 % of silica ground together with lump slag. The dosage of this aggregate into the concrete was 50 kg/m³. 200 kg/m³ of cement was used in the concrete. It was possible to prove by means of calculations that the effect of the silica on the compression strength of the concrete at the age of 28 days was 4-5 MPa. To achieve a corresponding additional strength it would have been necessary to add approximately 20 kg/m³ of cement instead of the 1,5 kg of silica now added. Consequently, the activity of silica obtained was over 10 compared with cement. According to the test results of the literature and to the applicant's own test results, the activity of silica compared with cement is about 3. In accordance with these tests, the activity of silica increased more than threefold.

A typical composition (% by weight) of the raw material mixture and thus of the final product discussed in the process is, depending on the use, as follows:
0 > silica ≦ 10 %
0 ≧ inactive materials, as limestone ≦ 15 %
0 ≧ grinding additive, as lignosulphate ≦ 5 %
the rest weakly active materials, as lump slag.

In connection with grinding, to the mill is preferably added grinding additive contributing to the grinding as well as to a dispersion of the finest grains into the concrete mix.

The grain size curve of the product is adjusted in such a way that it compensates the lacking grain sizes of the concrete in the best possible manner. The grain size distribution is adjusted by dosing into the mill materials to be ground in different ways in a ratio desired. In the product created in this way, the main part of the material belongs to the grain size area of 0-300 µm.

By changing the grading, the activity of the basic material and the quality and dosage of the pozzolana, it is possible to produce different fine aggregates for different concretes.

## Claims

1. A process for producing an active fine aggregate for the preparation of concrete, **characterized** in that a raw material mixture is made containing substantially dry inactive and/or weakly active components selected from a group consisting of e.g. limestone, quartz, lump slag, granulated and pelletized blast-furnace slag; and silica produced from the preparation of silicon; and that this substantially dry raw material mixture is ground in a mill or the like, as a result of which joint grinding the silica activates the surfaces of the inactive and/or weakly active components to react easily with calcium hydroxide.

2. A process according to claim 1, **characterized** in that the share of silica produced from the preparation of silicon is 50 % by weight at the most, preferably less than 10 % by weight.

3. A process according to claim 1 or 2,
**characterized** in that the composition of the fine aggregate is as follows:
- 10 % by weight of silica produced from the preparation of silicon at the most;
- 15 % by weight of inactive components, as limestone, at the most;
- 5 % by weight of a grinding additive, as lignosulphonate, at the most; and
- the rest weakly active components, as lump slag.

## Patentansprüche

1. Verfahren zur Herstellung eines aktiven feinen Zuschlagstoffes für die Betonherstellung, dadurch gekennzeichnet, daß eine Rohmaterialmischung bereitet wird, die im wesentlichen trockene inaktive und/oder schwach aktive Komponenten enthält, ausgewählt aus einer Gruppe von z. B. Kalkstein, Quarz, Stückschlacke, gekörnte und pelletisierte Hochofenschlacke, und Silika, das aus der Herstellung von Silicium erzeugt wurde, und daß diese im wesentlichen trockene Rohmaterialmischung in einer Mühle oder dergleichen gemahlen wird, wobei als Folge das gemeinsame Mahlen des Silika die Oberflächen der inaktiven und/oder schwach aktiven Komponenten aktiviert, so daß sie leicht mit Calciumhydroxid reagieren.

2. Verfahren nach Anspruch 1, dadurch gekennzeichnet, daß der Anteil des Silika, das aus der Herstellung von Silicium erzeugt wurde, höchstens 50 Gewichts-%, bevorzugt weniger als 10 Gewichts-%, beträgt.

3. Verfahren nach Anspruch 1 oder 2, dadurch gekennzeichnet, daß die Zusammensetzung des feinen Zuschlagstoffes wie folgt ist:
höchstens 10 Gewichts-% Silika, das aus der Herstellung von Silicium erzeugt wurde,
höchstens 15 Gewichts-% inaktive Komponenten, wie Kalkstein,
höchstens 5 Gewichts-% eines Mahladditivs, wie Lignosulfonat und
der Rest schwach aktive Komponenten, wie Stückschlacke.

## Revendications

1. Procédé de production d'un granulat fin actif pour la préparation de béton, caractérisé en ce que l'on prépare un mélange de matières premières contenant des composants inactifs et/ou faiblement actifs sensiblement secs choisis, par exemple, parmi du calcaire, du quartz, du laitier concassé, du laitier de haut fourneau granulé et en boulettes et de la silice produite à partir de la préparation de silicium, et en ce que ledit mélange de matières premières sensiblement sec est broyé dans un broyeur ou un dispositif analogue, à la suite de quoi le broyage conjoint de la silice active les surfaces des composants inactifs et/ou faiblement actifs pour leur permettre de réagir aisément avec l'hydroxyde de calcium.

2. Procédé selon la revendication 1, caractérisé en ce que la proportion de silice produite à partir de la préparation de silicium est de 50 % en poids au maximum, de préférence inférieure à 10 % en poids.

3. Procédé selon la revendication 1 ou 2,
caractérisé en ce que la composition du granulat fin est la suivante :
- 10 % en poids de silice produite à partir de la préparation de silicium au maximum ;
- 15 % en poids de composants inactifs, notamment du calcaire, au maximum ;
- 5 % en poids d'un additif de broyage, notamment un lignosulfonate, au maximum ; et
- le reste étant constitué de composants faiblement actifs, notamment du laitier concassé.
